# EUROPÄISCHE PATENTSCHRIFT

(11) **EP 2 753 485 B1**
(45) Veröffentlichungstag und Bekanntmachung des Hinweises auf die Patenterteilung: **28.06.2017**
(21) Anmeldenummer: 12758768.1
(22) Anmeldetag: 24.08.2012
(51) Int. Cl.: B60J 5/00

(54) **STEUERSYSTEM**
CONTROL SYSTEM
SYSTÈME DE COMMANDE

(30) Priorität: 05.09.2011 DE 102011112274
(43) Veröffentlichungstag der Anmeldung: 16.07.2014
(73) Patentinhaber: Brose Fahrzeugteile GmbH & Co. Kommanditgesellschaft, Bamberg, 96052 Bamberg (DE)
(72) Erfinder: MA, Zikang, 96052 Banberg (DE)
(74) Vertreter: Gottschald, Jan
(86) Internationale Anmeldenummer: PCT/EP2012/003577
(87) Internationale Veröffentlichungsnummer: WO 2013/034252

(56) Entgegenhaltungen:
- DE-A1- 10 235 925
- DE-A1-102005 042 402
- DE-A1-102008 041 354
- DE-A1-102009 004 384
- DE-A1-102009 041 555
- DE-A1-102009 047 066
- DE-A1-102010 048 144
- JP-A- 2010 236 184
- US-A1- 2009 243 826

## Beschreibung

Die Erfindung betrifft ein Steuersystem zur Ansteuerung eines motorischen Verschlusslements eines Kraftfahrzeugs gemäß dem Oberbegriff von Anspruch 1, ein Kraftfahrzeug mit einem solchen Steuersystem gemäß Anspruch 11 sowie ein Verfahren für den Betrieb eines solchen Steuersystems gemäß Anspruch 14.
Die heutigen Kraftfahrzeuge sind zunehmend mit motorisch betätigbaren Verschlusselementen ausgestattet. Bei solchen Verschlusselementen kann es sich beispielsweise um Türen, insbesondere Schiebetüren, Klappen, insbesondere Heckklappen, Heckdeckel, Motorhauben, Laderaumböden o. dgl. eines Kraftfahrzeugs handeln. Insoweit ist der Begriff "Verschlusselement" vorliegend weit zu verstehen.
Eine Komfortfunktion, der heute zunehmende Bedeutung zukommt, ist die automatische Betätigung der motorischen Heckklappe eines Kraftfahrzeugs. Bei dem bekannten Steuersystem (DE 20 2005 020 140 U1), von dem die Erfindung ausgeht, ist es vorgesehen, dass ein bedienerseitiges Bedienereignis, hier eine bedienerseitige Fußbewegung, das motorische Öffnen der Heckklappe bewirkt.

Hierfür sind eine der Heckklappe zugeordnete Antriebsanordnung, eine Steuerung sowie ein Abstandssensor vorgesehen. Die Steuerung überwacht die Sensorsignale daraufhin, ob das obige Bedienereignis vorliegt. In Abhängigkeit vom Ergebnis dieser Bedienereignisüberwachung wird entsprechend eine Ansteuerung der Antriebsanordnung vorgenommen.
Zur Erfassung der obigen Bedienereignisse können kapazitive Abstandssensoren Einsatz finden, die mit mindestens einer Messelektrode ausgestattet sind. Ein Bedienereignis löst hier eine Kapazitätsänderung der Elektrodenanordnung aus, die sich leicht elektronisch erfassen lässt. Eine solche Messelektrode ist regelmäßig in die Heckschürze eines Kraftfahrzeugs integriert und erstreckt sich über die gesamte Breite des Kraftfahrzeugs. Zwar ist ein solcher Abstandssensor robust und konstruktiv einfach aufgebaut. Allerdings ist der mögliche Funktionsumfang des Abstandssensors bei weitem nicht ausgeschöpft. Die DE 10 2005 042402 A1 offenbart ein Kraftfahrzeug mit einer sich aufgrund eines Öffnungsbefehls automatisch öffnenden Heckklappe. Eine Steuereinheit ist derart ausgebildet, dass die Heckklappe des Fahrzeugs automatisch geöffnet wird, sobald das Vorhandensein eines zugeordneten Zugangsberechtigungsmittels erkannt und zudem mittels eines Näherungssensors ein Abstandssignal zur einem Benutzer erfasst wird. Dabei ist der Näherungssensor derart angeordnet, dass der Benutzer, der sich dem Fahrzeug in Richtung der zu öffnenden Heckklappe nähert, erfasst und die Klappe zur genau diesem Zeitpunkt geöffnet wird. Der Erfindung liegt das Problem zugrunde, das bekannte Steuersystem derart auszugestalten und weiterzubilden, dass die vorhandenen Komponenten für die Erfassung eines Bedienereignisses besser ausgenutzt werden.

Das obige Problem wird bei einem Steuersystem gemäß dem Oberbegriff von Anspruch 1 durch die Merkmale es kennzeichnenden Teils von Anspruch 1 gelöst.

Wesentlich ist die Erkenntnis, dass ein Abstandssensor, der sich in zumindest einer Raumrichtung - Sensorerstreckung - erstreckt, nicht nur für die Erfassung eines Abstands zu einem Benutzer in einer Messrichtung, die senkrecht zu der Sensorerstreckung ausgerichtet ist, möglich ist. Die vorschlagsgemäße Lösung beruht auf der Erkenntnis, dass mit einem solchen Abstandssensor auch die Erfassung einer Benutzer-Längsbewegung entlang der Sensorerstreckung möglich ist, sofern der Abstandssensor in spezieller Weise ausgelegt ist.

Im Einzelnen wird vorgeschlagen, dass der Abstandssensor entlang einer Sensorerstreckung eine sich verändernde Sensitivität aufweist. Der Begriff "Sensitivität" ist hier in einem erweiterten Sinne derart zu verstehen, dass eine Änderung der Sensitivität bei identischem Abstand zu dem Benutzer stets eine entsprechende Änderung des Sensorsignals mit sich bringt.

Der Begriff "sich verändernde Sensitivität" bedeutet weiter, dass sich die Sensitivität in obigem Sinne jedenfalls an einer Stelle entlang der Sensorerstreckung ändert. Grundsätzlich kann die Sensitivität also zumindest stellenweise konstant, oder sogar Null sein. Im letztgenannten Fall reagiert der Abstandssensor auf die Annäherung eines Benutzers nicht.

Mit der vorschlagsgemäßen Lösung ist die sensorische Erfassung nicht auf Benutzer-Querbewegungen quer zur Sensorerstreckung, die eine Abstandsänderung zum Benutzer umfassen, beschränkt. Durch den vorschlagsgemäßen Sensitivitätsverlauf lässt sich nunmehr auch eine Benutzer-Längsbewegung erfassen, die ein entsprechendes Muster im zeitlichen Sensorsignalverlauf erzeugt. Hervorzuheben ist dabei die Tatsache, dass die zusätzliche Erfassung der Benutzer-Längsbewegung lediglich eine Modifikation eines Abstandssensors, und keinen zusätzlichen Sensor, erfordert.

Vorzugsweise ist der Abstandssensor mit einem Sensorelement ausgestattet (Anspruch 3), das bei der besonders bevorzugten Ausgestaltung gemäß Anspruch 4 eine längliche Messelektrode ist. Bei der Messelektrode handelt es sich im einfachsten Fall um einen einfachen elektrischen Leiter. Hiermit lässt sich auf einfachste Weise ein kapazitiver oder ein induktiver Sensor aufbauen.

Bei den weiter bevorzugten Ausgestaltungen gemäß den Ansprüchen 5 bis 7 weist der Sensitivitätsverlauf entlang der Sensorerstreckung mindestens ein Maximum und/oder mindestens ein Minimum auf. Durch eine geeignete, insbesondere über die Sensorerstreckung unsymmetrische Verteilung der Maxima bzw. Minima lässt sich sicherstellen, dass bei einer Benutzer-Längsbewegung ein Muster entsteht, das sich leicht aus dem zeitlichen Sensorsignalverlauf insgesamt extrahieren lässt.

Nach einer weiteren Lehre gemäß Anspruch 11, der ebenfalls eigenständige Bedeutung zukommt, wird ein Kraftfahrzeug mit einem motorischen Verschlusselement, insbesondere mit einer motorischen Heckklappe o. dgl., beansprucht, das mit einem obigen, vorschlagsgemäßen Steuersystem ausgestattet ist. Auf alle Ausführungen, die geeignet sind, das vorschlagsgemäße Kraftfahrzeug zu beschreiben, darf verwiesen werden.

Bei der bevorzugten Ausgestaltung gemäß Anspruch 13 ist der Abstandssensor in einer Heckschürze des Kraftfahrzeugs angeordnet, wobei die Maxima bzw. Minima im Sensitivitätsverlauf so angeordnet sind, dass eine Unterscheidung zwischen der ersten Hälfte der Heckschürze und einer zweiten Hälfte der Heckschürze möglich ist. Bei geeigneter Auslegung ist hiermit bei einer Benutzer-Längsbewegung eine Erfassung der Bewegungsrichtung und einer ersten Lage des Benutzers entlang der Sensorerstreckung möglich.

Nach einer weiteren Lehre gemäß Anspruch 14, der ebenfalls eigenständige Bedeutung zukommt, wird ein Verfahren für den Betrieb eines vorschlagsgemäßen Steuersystems beansprucht.

Wesentlich nach dieser weiteren Lehre ist, dass eine Benutzer-Längsbewegung entlang der Sensorerstreckung des Abstandssensors durch den Sensitivitätsverlauf entlang der Sensorerstreckung ein Muster im zeitlichen Sensorsignalverlauf ergibt, das von der Steuerung zumindest als Teil eines Bedienereignisses erfasst wird. Insoweit darf auf alle Ausführungen zu dem vorschlagsgemäßen Steuersystem verwiesen werden.

Bei der weiter bevorzugten Ausgestaltung gemäß Anspruch 15 ist es vorgesehen, dass das zu erfassende Bedienereignis sowohl eine Benutzer-Querbewegung im Wesentlichen senkrecht zu der Sensorerstreckung als auch eine Benutzer-Längsbewegung entlang er Sensorerstreckung umfasst. Bei einer solchen kombinierten Erfassung werden die Vorteile der vorschlagsgemäßen Lösung voll ausgeschöpft.

Im Folgenden wird die Erfindung anhand einer lediglich ein Ausführungsbeispiel darstellenden Zeichnung näher erläutert. In der Zeichnung zeigt
- Fig. 1: den Heckbereich eines Kraftfahrzeugs mit einem vorschlagsgemäßen Steuersystem zur Durchführung des vorschlagsgemäßen Verfahrens,
- Fig. 2: in ganz schematischer Darstellung die Heckschürze des Heckbereichs gemäß Fig. 1 in einer stirnseitigen Ansicht sowie lediglich angedeutet eine Benutzer-Längsbewegung, b) das durch die Benutzerbewegung gemäß a) erzeugte Muster im Sensorsignalverlauf,
- Fig. 3: die Darstellung gemäß Fig. 2 bei entgegengesetzter Benutzerbewegung.

Das vorschlagsgemäße Steuersystem wird im Folgenden anhand eines motorischen Verschlusselements 1 eines Kraftfahrzeugs erläutert, das als Heckklappe ausgestaltet ist.

Die Ausgestaltung des Verschlusselements 1 als Heckklappe eines Kraftfahrzeugs ist vorliegend bevorzugt. Allerdings darf im Hinblick auf das weite Verständnis des Begriffs "Verschlusselement" auf den einleitenden Teil der Beschreibung verwiesen werden. Insoweit gelten alle Ausführungen zu einer Heckklappe 1 entsprechend für alle anderen Arten von Verschlusselementen.

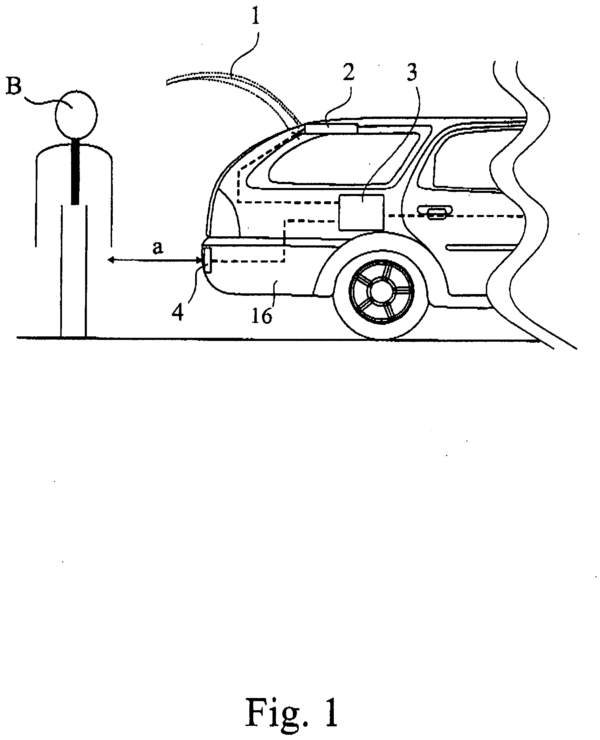

Der Heckklappe 1 ist eine Antriebsanordnung 2 zugeordnet, mittels der eine motorische Verstellung der Heckklappe 1 zwischen der in Fig. 1 in durchgezogener Linie dargestellten Schließstellung und der in Fig. 1 in gestrichelter Linie dargestellten Offenstellung bewirkbar ist.

Es ist ferner eine Steuerung 3 vorgesehen, die der Erfassung von Bedienereignissen und darauf basierend der Ansteuerung der motorischen Heckklappe 1 dient. Zur Erfassung der Bedienereignisse kommuniziert die Steuerung 3 mit mindestens einem Abstandssensor 4, wobei mittels des Abstandssensors 4 ein Abstand a vom Abstandssensor 4 zu einem Benutzer B erfassbar ist. Der Abstand zu dem Benutzer B umfaßt hier den Abstand zum Benutzer insgesamt oder zu einer Gliedmaße, insbesondere eines Beines, eines Fußes, eines Arms oder einer Hand des Benutzers.

Grundsätzlich können hier mehrere Abstandssensoren 4 vorgesehen sein. Im Folgenden ist im Sinne einer übersichtlichen Darstellung nur von einem einzigen Abstandssensor 4 die Rede. Alle diesbezüglichen Ausführungen gelten für ggf. vorgesehene, weitere Abstandssensoren 4 entsprechend.

Die Erfassung eines obigen Bedienereignisses führt vorzugsweise zu einer motorischen Betätigung der Heckklappe 1, insbesondere zu einem motorischen Öffnen oder Schließen oder zu einer Unterbrechung einer Öffnungs- oder Schließbewegung.

Wesentlich ist nun, dass der Abstandssensor 4 entlang einer Sensorerstreckung 5 eine sich verändernde Sensitivität 6 aufweist. Hinsichtlich der erweiterten Bedeutung des Begriffs "Sensitivität" darf auf die Ausführungen im allgemeinen Teil der Beschreibung verwiesen werden. Hier und vorzugsweise ist die Sensorerstreckung 5 senkrecht zur Fahrzeuglängsachse ausgerichtet, was nicht beschränkend zu verstehen ist.

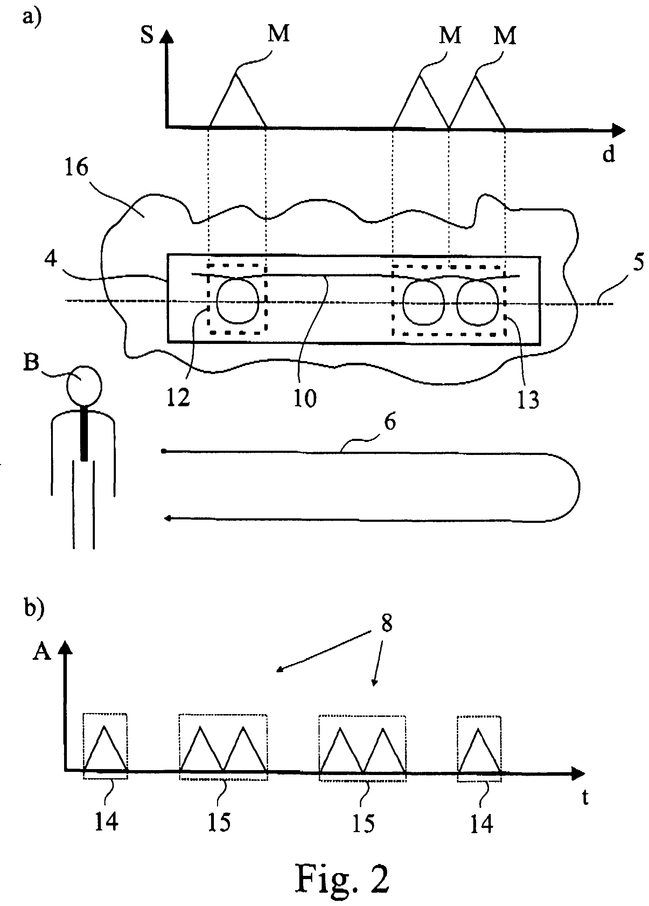

Der Sensitivitätsverlauf S über einer Strecke d entlang der Sensorerstreckung 5 ist in den Fig. 2a) und 3a) schematisch dargestellt.

Bewegt sich ein Benutzer B oder ein Körperteil des Benutzers B, beispielsweise ein Bein des Benutzers B, entlang der Sensorerstreckung 5, so passiert er bzw. es die in Fig. 2a) und 3a) dargestellten, noch zu erläuternden Maxima im Sensitivitätsverlauf S, was zu den zeitlichen Sensorsignalverläufen gemäß Fig. 2b) und 3b) führt. Durch den Sensitivitätsverlauf S entlang der Sensorerstreckung 5 ergibt sich ein extrahierbares Muster 8, 9 im zeitlichen Sensorsignalverlauf, das die Steuerung 3 hier zumindest als Teil eines Bedienereignisses erfasst. Interessant und noch zu erläutern ist die Tatsache, dass sich aufgrund der Andersartigkeit der in den Fig. 2b) und 3b) gezeigten Muster im Sensorsignalverlauf 8,9 die unterschiedlichen Bewegungsrichtungen des Benutzers B bzw. des Körperteils des Benutzers B erfassen lassen.

Hier und vorzugsweise verläuft der Abstandssensor 4 entlang der Sensorerstreckung 5 im Wesentlichen gerade. Dies kann auch nur abschnittsweise so vorgesehen sein. Alternativ oder zusätzlich kann es vorgesehen sein, dass die Sensorerstreckung 5 zumindest abschnittsweise gebogen verläuft. Denkbar ist schließlich, dass sich der Abstandssensor 4 in zwei Raumrichtungen erstreckt. Dann spannt der Abstandssensor 4 eine Ebene auf. Alle Ausführungen zu dem dargestellten Abstandssensor 4 lassen sich auf einen, sich in zwei Raumrichtungen erstreckenden Abstandssensor entsprechend anwenden.

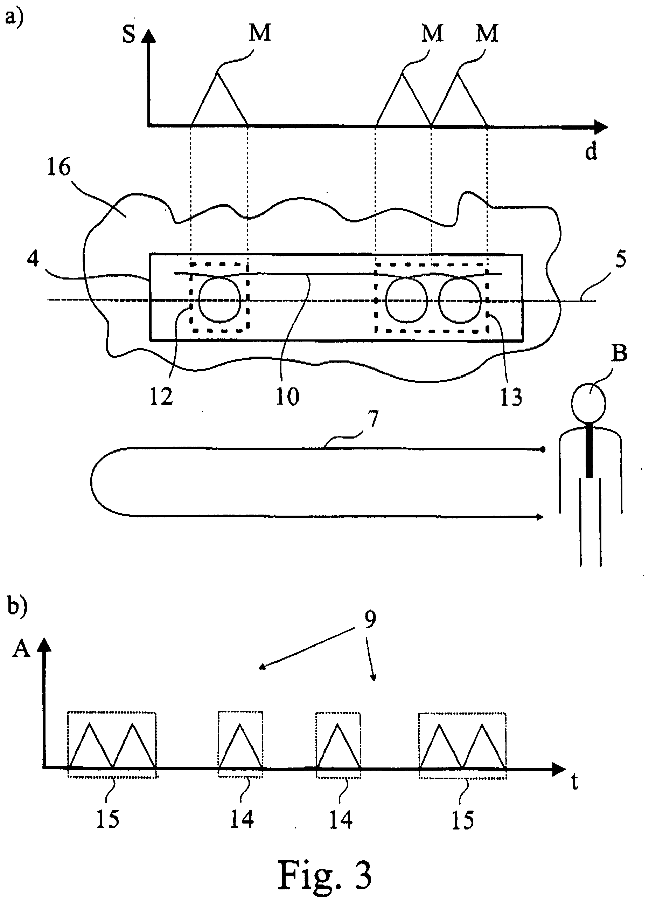

Es lässt sich den Darstellungen gemäß Fig. 2a) und Fig. 3a) entnehmen, dass der Abstandssensor 4 ein Sensorelement 10 aufweist, das entlang der Sensorerstreckung 5 des Abstandssensors 4 angeordnet ist. Hier und vorzugsweise ist ein einziges Sensorelement 10 vorgesehen, das in noch zu erläuternder Weise ausgestaltet sein kann.

Bei dem dargestellten und insoweit bevorzugten Ausführungsbeispiel ist das Sensorelement 10 abschnittsweise parallel zu der Sensorerstreckung 5, insbesondere gerade, ausgerichtet. Zusätzlich ist es hier und vorzugsweise vorgesehen, dass das Sensorelement 10 zur Beeinflussung der Sensitivität abschnittsweise von der parallelen Ausrichtung abweicht und beispielsweise schlaufenförmig verläuft.

Hier und vorzugsweise handelt es sich bei dem Abstandssensor 4 um einen kapazitiven Sensor. Vorteilhaft kann aber auch die Anwendung eines induktiven Sensors sein. Grundsätzlich sind auch andere Sensorprinzipien anwendbar. Denkbar ist beispielsweise, dass es sich bei dem Abstandssensor 4 um einen magnetischen Sensor handelt.

Das Sensorelement 10 ist vorzugsweise eine in den Fig. 2a) und 3a) dargestellte, längliche Messelektrode, die aus mindestens einem, hier und vorzugsweise aus genau einem, elektrischen Leiter besteht.

Die obige schlaufenförmige Ausgestaltung führt zu einer Beeinflussung der Sensitivität des kapazitiven Abstandssensors 4. Zur Beeinflussung der Sensitivität sind beliebige lokale Ausformungen der Meßelektrode denkbar. Hierzu gehören beispielsweise mäanderförmige Ausformungen o. dgl..

Den Darstellungen gemäß Fig. 2a) und 3a) lässt sich auch entnehmen, dass der Sensitivitätsverlauf S entlang der Sensorerstreckung 5 eine Reihe von Maxima M aufweist, die jeweils auf eine der schlaufenartigen Ausbildungen im Sensorelement 10 zurückgehen. Alternativ oder zusätzlich kann es vorgesehen sein, dass entsprechende Minima im Sensitivitätsverlauf S vorgesehen sind. In besonders bevorzugter Ausgestaltung sind mindestens zwei Maxima oder mindestens zwei Minima realisiert, um ein obiges Muster im zeitlichen Sensorsignalverlauf erzeugen zu können.

Für den Fall, dass mindestens drei Maxima und/oder Minima vorgesehen sind, wird vorgeschlagen, dass die Maxima zueinander bzw. die Minima zueinander entlang der Sensorerstreckung 5 nicht äquidistant angeordnet sind.

Weiter vorzugsweise wird vorgeschlagen, dass die Maxima bzw. die Minima über die Sensorerstreckung 5 unsymmetrisch verteilt sind.

Mit den oben genannten Varianten zur Ausbildung des Sensorelements 10 lässt sich erreichen, dass bei einer Benutzer-Längsbewegung entlang der Sensorerstreckung 5 ein Muster 8, 9 im zeitlichen Sensorsignalverlauf entsteht, der leicht aus dem übrigen Sensorsignalverlauf extrahierbar ist, so dass eine Benutzer-Längsbewegung entsprechend leicht erkannt werden kann.

In den Fig. 2 und 3 steht eine Benutzerbewegung 6, 7 im Vordergrund, die gemäß Fig. 2a) und 3a) aus einer Hinbewegung und einer anschließenden Rückbewegung besteht. Hier und vorzugsweise ist diese Benutzerbewegung 6, 7 entlang des Heckbereichs des Kraftfahrzeugs vorgesehen, wie noch erläutert wird. Denkbar ist aber auch, dass Benutzerbewegungen erfasst werden, die im Wesentlichen senkrecht zur Erstreckung des Heckbereichs des Kraftfahrzeugs ausgerichtet sind. Auch dies wird weiter unten erläutert.

Vorzugsweise ist es so, dass der Sensitivitätsverlauf S entlang der Sensorerstreckung 5 derart vorgesehen ist, dass aus dem Muster 8, 9 im zeitlichen Sensorsignalverlauf A, das bei einer Benutzer-Längsbewegung entlang der Sensorerstreckung 5 entsteht, mittels der Steuerung 3 die Bewegungsrichtung des Benutzers B ermittelbar ist.

Ein Vergleich der Fig. 2b) und 3b) zeigt, dass die beiden resultierenden Muster 8, 9 im zeitlichen Sensorsignalverlauf gewissermaßen komplementär zueinander sind, woraus sich die Bewegungsrichtung des Benutzers B ohne weiteres erfassen lässt.

Denkbar ist aber auch, dass aus dem Muster 8, 9 im zeitlichen Sensorsignalverlauf A, das bei einer Benutzer-Längsbewegung entlang der Sensorerstreckung 5 entsteht, mittels der Steuerung 3 eine erste Lage des Benutzers B entlang der Sensorerstreckung 5 ermittelbar ist.

Interessant bei dem dargestellten und insoweit bevorzugten Ausführungsbeispiel ist die Tatsache, dass dem Abstandssensor 4 entlang seiner Sensorerstreckung 5 mindestens zwei Erfassungsbereiche 12, 13, hier und vorzugsweise genau zwei Erfassungsbereiche 12, 13 zugeordnet sind, die entlang der Sensorerstreckung 5 jeweils einen unterschiedlichen Sensitivitätsverlauf S aufweisen. Im Einzelnen weist der erste Erfassungsbereich 12 ein einziges Maximum M und der zweite Erfassungsbereich 13 zwei nebeneinander liegende Maxima M auf.

Im Ergebnis erzeugt eine Benutzer-Längsbewegung entlang der Sensorerstreckung 5 in den Erfassungsbereichen 12, 13 unterschiedliche Teilmuster 14, 15, wie in Fig. 2b) und 3b) dargestellt sind. Diese Teilmuster 14, 15 gehen auf die Sensitivitätsverläufe S innerhalb der Erfassungsbereiche 12, 13 zurück, so dass das dem ersten Erfassungsbereich 12 zugeordnete Teilmuster 14 ein einzelnes Maximum und das dem zweiten Erfassungsbereich 13 zugeordnete Teilmuster 15 ein doppeltes Maximum aufweist. Kodiert man im Sensorsignalverlauf A ein einzelnes Maximum mit "1" und ein doppeltes Maximum mit "2", so zeigt der in Fig. 2b) dargestellte Sensorverlauf die Nummernfolge "1, 2, 2, 1", während der in Fig. 3b) dargestellte Sensorsignalverlauf die Nummernfolge "2, 1, 1, 2" zeigt. Auf diese Weise lässt sich leicht feststellen, in welcher Bewegungsrichtung die Benutzerbewegung durchgeführt worden ist.

Das dargestellte Kraftfahrzeug ist mit einem Karosseriebauteil 16 ausgestattet, bei dem es sich beispielsweise um eine Front-, Heck- oder Seitenschürze handeln kann. Der Abstandssensor 4 ist im montierten Zustand in oder hinter dem Karosseriebauteil 16 angeordnet. Bei dem hier dargestellten, als Heckschürze ausgestalteten Karosseriebauteil 6 erstreckt sich der Abstandssensor 4 vorzugsweise mindestens über die wesentliche Breite der Heckschürze 16.

Grundsätzlich kann es vorgesehen sein, dass sich der Abstandssensor 4 auch senkrecht zum Karosseriebauteil 16, hier zu der Heckschürze 16, erstreckt. Dann führt beispielsweise eine Fußbewegung, die senkrecht zur Erstreckung der Heckschürze 16 und unterhalb der Heckschürze 16 vorgenommen wird, ein Muster 8, 9 im Sensorsignalverlauf A, das auf den Sensitivitätsverlauf S zurückgeht. Andere Varianten für die Erstreckung des Abstandssensors 4 sind denkbar.

In erster Linie wird es aber so sein, dass die Fußbewegung auf die Ermittlung einer Abstandsänderung durch den Abstandssensor 4 zurückgeht, und dass eine Benutzer-Längsbewegung entlang der Sensorerstreckung 5 durch das Muster 8, 9 im Sensorsignalverlauf A, das auf die Sensitivitätsänderung zurückgeht, erfasst wird. Hierfür ist es vorzugsweise vorgesehen, dass der Sensitivitätsverlauf S entlang der Sensorerstreckung 5 in der ersten Hälfte der Heckschürze 16 eine erste Anzahl von Maxima M bzw. Minima und in der zweiten Hälfte der Heckschürze 16 eine zweite Anzahl von Maxima M bzw. Minima aufweist. Bei dem dargestellten und insoweit bevorzugten Ausführungsbeispiel ist in der linken Hälfte der Heckschürze 16 ein einziges Maximum M vorgesehen, während in der rechten Hälfte der Heckschürze 16 zwei Maxima M vorgesehen sind.

Nach einer weiteren Lehre, der eigenständige Bedeutung zukommt, wird ein Kraftfahrzeug beansprucht, das mit einem motorischen Verschlusselement 1, insbesondere mit einer motorischen Heckklappe 1, einer motorischen Seitentür, einer motorischen Schiebetür o. dgl., ausgestattet ist. Wesentlich ist, dass ein vorschlagsgemäßes Steuersystem zur Ansteuerung des motorischen Verschlusselements 1 vorgesehen ist. Im Hinblick auf bevorzugte Ausgestaltungen darf auf die obigen Ausführungen zu dem vorschlagsgemäßen Steuersystem verwiesen werden.

Nach einer weiteren Lehre, der ebenfalls eigenständige Bedeutung zukommt, wird ein Verfahren für den Betrieb des vorschlagsgemäßen Steuersystems beansprucht. Wesentlich bei dem Verfahren ist, dass eine Benutzer-Längsbewegung entlang der Sensorerstreckung 5 des Abstandssensors 4 durch den Sensitivitätsverlauf S entlang der Sensorerstreckung 5 ein Muster 8, 9 im zeitlichen Sensorsignalverlauf A ergibt, das von der Steuerung 5 zumindest als Teil eines Bedienereignisses erfasst wird. Es wurde weiter oben erläutert, dass insbesondere die Aufteilung des Sensor-Erfassungsbereichs in zwei Erfassungsbereiche 12, 13 auf einfache Weise die Extraktion eines Musters im Sensorsignalverlauf erlaubt, das auf den Sensitivitätsverlauf S zurückgeht. Auf diese Art lässt sich ein obiger Teil eines Bedienereignisses mit einfachen steuerungstechnischen Mitteln erfassen.

In besonders bevorzugter Ausgestaltung umfasst ein Bedienereignis eine Benutzer-Querbewegung im Wesentlichen senkrecht zu der Sensorerstreckung 5. Diese Benutzer-Querbewegung erzeugt ein Muster im zeitlichen Sensorsignalverlauf, das auf eine Änderung des Abstands des Abstandssensors 4 zum Benutzer B zurückgeht.

In besonders bevorzugter Ausgestaltung umfasst ein Bedienereignis sowohl die obige Benutzer-Querbewegung als auch die obige Benutzer-Längsbewegung. Bei der Benutzer-Querbewegung kann es sich beispielsweise um eine Fußbewegung handeln, die eine Hinbewegung und eine Rückbewegung senkrecht zur Erstreckung der Heckschürze 16 des Kraftfahrzeugs umfasst. Bei der Benutzer-Längsbewegung kann es sich um eine Fortbewegung des Benutzers B entlang der Heckschürze 16 des Kraftfahrzeugs handeln, so dass der Benutzer B außerhalb des Kollisionsbereichs der Heckklappe 1 o. dgl. kommt. Damit wird eine motorische Bewegung der Heckklappe 1 nur dann ausgelöst, wenn der Benutzer die vorbestimmte Benutzer-Querbewegung ausgeführt hat und sich anschließend seitlich aus dem Kollisionsbereich der Heckklappe 1 herausbewegt hat.

Wie oben erläutert, kann die vorschlagsgemäße Lösung auf alle Arten von Verschlußelementen angewendet werden. Auch können mit der vorschlagsgemäßen Lösung alle Arten von Benutzerbewegungen erfaßt werden. Dazu gehört neben der Fortbewegung des Benutzers die Bewegung der Gliedmaßen des Benutzers.

Nur zur Klarstellung darf abschließend darauf hingewiesen werden, dass alle oben genannten Benutzerbewegungen jeweils nicht nur eine Bewegung des Benutzers B insgesamt, sondern auch eine Bewegung einzelner Körperteile des Benutzers B umfassen können.

## Patentansprüche

1. Steuersystem zur Ansteuerung eines motorischen Verschlusselements (1) eines Kraftfahrzeugs, wobei zur Erfassung von Bedienereignissen eine Steuerung (3) und mindestens ein Abstandssensor (4) vorgesehen sind, wobei mittels des Abstandssensors (4) ein Abstand zu einem Benutzer (B) erfassbar ist,
**dadurch gekennzeichnet,**
**dass** der Abstandssensor (4) entlang einer Sensorerstreckung (5) eine sich verändernde Sensitivität aufweist und dass eine Benutzer-Längsbewegung entlang der Sensorerstreckung (5) durch den Sensitivitätsverlauf (S) entlang der Sensorerstreckung (5) ein Muster (8, 9) im zeitlichen Sensorsignalverlauf (A) ergibt, das die Steuerung (3) zumindest als Teil eines Bedienereignisses erfasst.

2. Steuersystem nach Anspruch 1, **dadurch gekennzeichnet, dass** die Sensorerstreckung (5) des Abstandssensors (4) zumindest abschnittsweise gerade verläuft, und/oder, dass die Sensorerstreckung (5) zumindest abschnittsweise gebogen verläuft.

3. Steuersystem nach Anspruch 1 oder 2, **dadurch gekennzeichnet, dass** der Abstandssensor (4) ein Sensorelement (10) aufweist, das entlang der Sensorerstreckung (5) des Abstandssensors (4) angeordnet ist, vorzugsweise, dass das Sensorelement (10) zumindest abschnittsweise parallel zu der Sensorerstreckung (5), insbesondere gerade, ausgerichtet ist und/oder, dass das Sensorelement (10) zur Beeinflussung der Sensitivität mindestens abschnittsweise von der parallelen Ausrichtung abweicht, insbesondere, dass das Sensorelement (10) zur Beeinflussung der Sensitivität mindestens abschnittsweise schlaufenförmig verläuft.

4. Steuersystem nach einem der vorhergehenden Ansprüche, **dadurch gekennzeichnet, dass** das Sensorelement (10) eine längliche Messelektrode ist, die aus mindestens einem, vorzugsweise genau einem, elektrischen Leiter besteht.

5. Steuersystem nach einem der vorhergehenden Ansprüche, **dadurch gekennzeichnet, dass** der Sensitivitätsverlauf (S) entlang der Sensorerstreckung (5) mindestens ein Maximum (M), insbesondere mindestens zwei Maxima (M), und/oder mindestens ein Minimum, insbesondere mindestens zwei Minima, aufweist.

6. Steuersystem nach Anspruch 5, **dadurch gekennzeichnet, dass** die Maxima (M) zueinander und/oder die Minima zueinander entlang der Sensorerstreckung (5) nicht äquidistant angeordnet sind.

7. Steuersystem nach Anspruch 5 oder 6, **dadurch gekennzeichnet, dass** die Maxima (M) und/oder die Minima über die Sensorerstreckung (5) unsymmetrisch verteilt sind.

8. Steuersystem nach einem der vorhergehenden Ansprüche, **dadurch gekennzeichnet, dass** der Sensitivitätsverlauf (S) entlang der Sensorerstreckung (5) derart vorgesehen ist, dass aus dem Muster (8, 9) im zeitlichen Sensorsignalverlauf (A), das bei einer Benutzer-Längsbewegung entlang der Sensorerstreckung (5) entsteht, mittels der Steuerung (3) die Bewegungsrichtung des Benutzers (B) ermittelbar ist.

9. Steuersystem nach einem der vorhergehenden Ansprüche, **dadurch gekennzeichnet, dass** der Sensitivitätsverlauf (S) entlang der Sensorerstreckung (5) derart vorgesehen ist, dass aus dem Muster (8, 9) im zeitlichen Sensorsignalverlauf (A), das bei einer Benutzer-Längsbewegung entlang der Sensorerstreckung (5) entsteht, mittels der Steuerung (3) ein erste Lage des Benutzers (B) entlang der Sensorerstreckung (5) ermittelbar ist.

10. Steuersystem nach einem der vorhergehenden Ansprüche, **dadurch gekennzeichnet, dass** dem Abstandssensor (4) entlang der Sensorerstreckung (5) mindestens zwei Erfassungsbereiche (12, 13) zugeordnet sind, die entlang der Sensorerstreckung (5) jeweils einen unterschiedlichen Sensitivitätsverlauf (S) aufweisen, so dass eine Benutzer-Längsbewegung entlang der Sensorerstreckung (5) in den Erfassungsbereichen (12, 13) unterschiedliche Teilmuster (14, 15) im zeitlichen Sensorsignalverlauf (A) erzeugt und dass die Teilmuster (14, 15) auf die Sensidvitätsverläufe (S) innerhalb der Erfassungsbereiche (12, 13) zurückgehen.

11. Kraftfahrzeug mit einem motorischen Verschlusselement (1), insbesondere mit einer motorischen Heckklappe (1), einer motorischen Seitentür, einer motorische Schiebetür o. dgl., **gekennzeichnet durch** ein Steuersystem (3) zur Ansteuerung des motorischen Verschlusselements (1) nach einem der vorhergehenden Ansprüche.

12. Kraftfahrzeug nach Anspruch 11, **dadurch gekennzeichnet, dass** das Kraftfahrzeug ein Karosseriebauteil (16), insbesondere eine Front-, Heck- oder Seitenschürze (16) aufweist und dass der Abstandssensor (4) im montierten Zustand in oder hinter dem Karosseriebauteil (16) angeordnet ist, vorzugsweise, dass sich der Abstandssensor (4) mindestens über die wesentliche Breite des Karosseriebauteils (16), insbesondere der Front-, Heck- oder Seitenschürze (16), erstreckt.

13. Kraftfahrzeug nach Anspruch 12, **dadurch gekennzeichnet, dass** der Sensitivitätsverlauf (S) entlang der Sensorerstreckung (5) in der ersten Hälfte der Heckschürze (16) eine erste Anzahl von Maxima (M) bzw. Minima und in der zweiten Hälfte der Heckschürze (16) eine zweite Anzahl von Maxima (M) bzw. Minima aufweist.

14. Verfahren für den Betrieb eines Steuersystems zur Ansteuerung eines motorischen Verschlusselements (1) eines Kraftfahrzeugs nach einem der Ansprüche 1 bis 10, wobei eine Benutzer-Längsbewegung entlang der Sensorerstreckung (5) des Abstandssensors (4) durch den Sensitivitätsverlauf (S) entlang der Sensorerstreckung (5) ein Muster (8, 9) im zeitlichen Sensorsignalverlauf (A) ergibt, das von der Steuerung (3) zumindest als Teil eines Bedienereignisses erfasst wird.

15. Verfahren nach Anspruch 14, **dadurch gekennzeichnet, dass** ein Bedienereignis eine Benutzer-Querbewegung im Wesentlichen senkrecht zu der Sensorerstreckung (5) umfasst, die ein Muster (8, 9) im zeitlichen Sensorsignalverlauf (A) erzeugt, das auf eine Änderung des Abstands zum Benutzer (B) zurückgeht.

## Claims

1. Control system for driving a motorized closure element (1) of a motor vehicle, wherein a control arrangement (3) and at least one distance sensor (4) are provided in order to detect operator control events, wherein a distance from a user (B) can be detected by means of the distance sensor (4),
**characterized**
**in that** the distance sensor (4) has a changing sensitivity along a sensor extent (5), and in that a longitudinal movement by the user along the sensor extent (5) produces a pattern (8, 9) in the profile (A) of the sensor signal with respect to time, which pattern is detected by the control arrangement (3) at least as part of an operator control event, owing to the sensitivity profile (S) along the sensor extent (5).

2. Control system according to claim 1, **characterized in that** the sensor extent (5) of the distance sensor (4) runs in a straight line at least in sections, and/or **in that** the sensor extent (5) runs with a bend at least in sections.

3. Control system according to Claim 1 or 2, **characterized in that** the distance sensor (4) has a sensor element (10) which is arranged along the sensor extent (5) of the distance sensor (4), preferably **in that** the sensor element (10) is oriented parallel to the sensor extent (5), in particular in a straight line, at least in sections, and/or **in that** the sensor element (10) deviates from the parallel orientation at least in sections in order to influence the sensitivity, in particular **in that** the sensor element (10) runs in the form of a loop at least in sections in order to influence the sensitivity.

4. Control system according to one of the preceding claims, **characterized in that** the sensor element (10) is an elongate measurement electrode which comprises at least one, preferably precisely one, electrical conductor.

5. Control system according to one of the preceding claims, **characterized in that** the sensitivity profile (S) along the sensor extent (5) has at least one maximum (M), in particular at least two maxima (M), and/or at least one minimum, in particular at least two minima.

6. Control system according to Claim 5, **characterized in that** the maxima (M) and/or the minima are not arranged equidistantly in relation to one another along the sensor extent (5).

7. Control system according to Claim 5 or 6, **characterized in that** the maxima (M) and/or the minima are distributed in an asymmetrical manner over the sensor extent (5).

8. Control system according to one of the preceding claims, **characterized in that** the sensitivity profile (S) along the sensor extent (5) is provided in such a way that the movement direction of the user (B) can be ascertained from the pattern (8, 9) in the profile (A) of the sensor signal with respect to time, which pattern is produced in the event of a longitudinal movement by the user along the sensor extent (5), by means of the control arrangement (3).

9. Control system according to one of the preceding claims, **characterized in that** the sensitivity profile (S) along the sensor extent (5) is provided in such a way that a first position of the user (B) along the sensor extent (5) can be ascertained from the pattern (8, 9) in the profile (A) of the sensor signal with respect to time, which pattern is produced in the event of a longitudinal movement by the user along the sensor extent (5), by means of the control arrangement (3).

10. Control system according to one of the preceding claims, **characterized in that** at least two detection regions (12, 13) are associated with the distance sensor (4) along the sensor extent (5), said detection regions each having a different sensitivity profile (S) along the sensor extent (5), with the result that a longitudinal movement by the user along the sensor extent (5) into the detection regions (12, 13) generates different partial patterns (14, 15) in the profile (A) of the sensor signal with respect to time, and **in that** the partial patterns (14, 15) are based on the sensitivity profiles (S) within the detection regions (12, 13).

11. Motor vehicle comprising a motorized closure element (1), in particular comprising a motorized tailgate (1), a motorized side door, a motorized sliding door or the like, **characterized by** a control system (3) for driving the motorized closure element (1) according to one of the preceding claims.

12. Motor vehicle according to Claim 11, **characterized in that** the motor vehicle has a body component (16), in particular a front, rear or side skirt (16), and **in that** the distance sensor (4) is arranged in or behind the body component (16) in the fitted state, preferably in that the distance sensor (4) extends at least over the majority of the width of the body component (16), in particular the front, rear or side skirt (16).

13. Motor vehicle according to Claim 12, **characterized in that** the sensitivity profile (S) along the sensor extent (5) has a first number of maxima (M) and/or minima in the first half of the rear skirt (16), and has a second number of maxima (M) and/or minima in the second half of the rear skirt (16).

14. Method for the operation of a control system for driving a motorized closure element (1) of a motor vehicle according to one of Claims 1 to 10, wherein a longitudinal movement by the user along the sensor extent (5) of the distance sensor (4) produces a pattern (8, 9) in the profile (A) of the sensor signal with respect to time, which pattern is detected by the control arrangement (3) at least as part of an operator control event, owing to the sensitivity profile (S) along the sensor extent (5).

15. Method according to Claim 14, **characterized in that** an operator control event comprises a lateral movement by the user substantially perpendicular to the sensor extent (5), said lateral movement generating a pattern (8, 9) in the profile (A) of the sensor signal with respect to time, which pattern is based on a change in the distance from the user (B).

## Revendications

1. Système de commande destiné à actionner un élément de fermeture (1) motorisé d'un véhicule automobile, pour la détection d'événements dus à l'utilisateur, une commande (3) et au moins un capteur de distance (4) étant prévus, au moyen du capteur de distance (4), une distance par rapport à l'utilisateur (B) étant détectable,
**caractérisé en ce que**
le long d'une extension du capteur (5), le capteur de distance (4) fait preuve d'une sensibilité variable et **en ce qu'**un déplacement longitudinal de l'utilisateur le long de l'extension du capteur (5) à travers le trajet de sensibilité (S) le long de l'extension du capteur (5) forme un motif (8, 9) dans le trajet (A) du signal du capteur dans le temps que la commande (3) détecte au moins en tant qu'une partie de l'événement dû à l'utilisateur.

2. Système de commande selon la revendication 1, **caractérisé en ce que** l'extension de capteur (5) du capteur de distance (4) s'étend sous forme droite au moins par sections et/ou **en ce que** l'extension du capteur (5) s'écoule sous forme curviligne, au moins par sections.

3. Système de commande selon la revendication 1 ou la revendication 2, **caractérisé en ce que** le capteur de distance (4) comporte un élément de capteur (10) qui est placé le long de l'extension de capteur (5) du capteur de distance (4), de préférence **en ce qu'**au moins par sections, l'élément de capteur (10) est orienté à la parallèle, notamment sous forme droite par rapport à l'extension du capteur (5) et/ou **en ce que**, pour influencer la sensibilité, l'élément de capteur (10) diverge au moins par sections de l'orientation parallèle, notamment que pour influencer la sensibilité, l'élément de capteur (10) s'écoule au moins par sections en forme de boucle.

4. Système de commande selon l'une quelconque des revendications précédentes, **caractérisé en ce que** l'élément de capteur (10) est une électrode de mesure allongée qui est constituée d'au moins un, de préférence d'exactement un conducteur électrique.

5. Système de commande selon l'une quelconque des revendications précédentes, **caractérisé en ce que** le trajet de sensibilité (S) le long de l'extension du capteur (5) présente au moins un maximum (M), notamment au moins deux maximums (M) et/ou au moins un minimum, notamment au moins deux minimums.

6. Système de commande selon la revendication 5, **caractérisé en ce que** les maximums (M) mutuellement et/ou les minimums mutuellement ne sont pas placés de manière équidistante le long de l'extension du capteur (5).

7. Système de commande selon la revendication 5 ou la revendication 6, **caractérisé en ce que** les maximums (M) et/ou les minimums sont distribués de manière asymétrique sur l'extension du capteur (5).

8. Système de commande selon l'une quelconque des revendications précédentes, **caractérisé en ce que** le trajet de sensibilité (S) le long du trajet du capteur (5) est prévu de telle sorte qu'à partir du motif (8, 9) dans la courbe du signal du capteur (A) dans le temps qui résulte lors d'un déplacement longitudinal de l'utilisateur le long de l'extension du capteur (5), la direction de déplacement de l'utilisateur (B) peut être déterminée au moyen de la commande (3).

9. Système de commande selon l'une quelconque des revendications précédentes, **caractérisé en ce que** le trajet de sensibilité (S) le long de l'extension du capteur (5) est prévu de telle sorte qu'à partir du motif (8, 9) dans la courbe du signal du capteur (A) dans le temps qui résulte lors d'un déplacement longitudinal de l'utilisateur le long de l'extension du capteur (5), une première position de l'utilisateur (B) le long de l'extension du capteur (5) peut être déterminée au moyen de la commande (3).

10. Système de commande selon l'une quelconque des revendications précédentes, **caractérisé en ce que** le long du trajet du capteur (5), au moins deux zones de détection (12, 13) qui le long de l'extension du capteur (5) présentent chacune un trajet de sensibilité (S) différent sont associées au capteur de distance (4), de telle sorte qu'un déplacement longitudinal de l'utilisateur le long de l'extension du capteur (5) dans les zones de détection (12, 13) génère des motifs partiels (14, 15) différents dans la courbe du signal du capteur (A) dans le temps et **en ce que** les motifs partiels (14, 15) se rapportent aux trajets de sensibilité (S) à l'intérieur des zones de détection (12, 13).

11. Véhicule automobile, avec un élément de fermeture (1) motorisé, notamment avec un hayon arrière (1) motorisé, une portière latérale motorisée, une portière coulissante motorisée ou similaires, **caractérisé par** un système de commande (3), destiné à actionner l'élément de fermeture (1) motorisé selon l'une quelconque des revendications précédentes.

12. Véhicule automobile selon la revendication 11, **caractérisé en ce que** le véhicule automobile comporte un élément de carrosserie (16), notamment un tablier frontal, arrière ou latéral (16) et **en ce que** lorsqu'il est monté, le capteur de distance (4) est placé dans ou derrière l'élément de carrosserie (16), de préférence **en ce que** le capteur de distance (4) s'étend au moins sur la majeure partie de la largeur de l'élément de carrosserie (16), notamment le tablier frontal, arrière ou latéral (16).

13. Véhicule automobile selon la revendication 12, **caractérisé en ce que** le trajet de sensibilité (S) le long de l'extension du capteur (5) comporte un première nombre de maximums (M) ou de minimums dans la première moitié du tablier arrière (16) et un deuxième nombre de maximums (M) ou de minimums dans la deuxième moitié du tablier arrière (16).

14. Procédé destiné à faire fonctionner un système de commande pour l'actionnement d'un élément de fermeture (1) motorisé d'un véhicule automobile selon l'une quelconque des revendications 1 à 10, un déplacement longitudinal de l'utilisateur le long de l'extension de capteur (5) du capteur de distance (4) à travers le trajet de sensibilité (S) le long de l'extension du capteur (5) donnant lieu à un motif (8, 9) dans le trajet du signal du capteur (A) dans le temps qui est détecté par la commande (3) au moins en tant qu'une partie d'un événement dû à l'utilisateur.

15. Procédé selon la revendication 14, **caractérisé en ce qu'**un événement dû à l'utilisateur comprend un déplacement transversal de l'utilisateur sensiblement à la perpendiculaire de l'extension du capteur (5) qui génère un motif (8, 9) dans le trajet du signal du capteur (A) dans le temps qui se rapporte à une modification de la distance par rapport à l'utilisateur (B).
